# FASCICULE DE BREVET EUROPEEN

(11) **EP 3 121 902 B1**
(45) Date de publication et mention de la délivrance du brevet: **14.11.2018**
(21) Numéro de dépôt: 16180427.3
(22) Date de dépôt: 20.07.2016
(51) Int. Cl.: H01Q 25/00, G01S 13/88, H01Q 3/01, H01Q 21/30, G01S 13/34

(54) **DISPOSITIF RADIOÉLECTRIQUE D'ÉMISSION-RÉCEPTION D'ONDES RADIOÉLECTRIQUES ET SYSTÈME DE RADIO ALTIMÉTRIE ASSOCIÉ**
FUNKVORRICHTUNG ZUM SENDEN/EMPFANGEN VON FUNKWELLEN, UND ENTSPRECHENDES HÖHENMESSUNGSFUNKSYSTEM
RADIOELECTRIC DEVICE FOR TRANSMITTING AND RECEIVING RADIOELECTRIC WAVES AND ASSOCIATED RADIO ALTIMETRY SYSTEM

(30) Priorité: 22.07.2015 FR 1501559
(43) Date de publication de la demande: 25.01.2017
(73) Titulaire: Thales, 92400 Courbevoie (FR)
(72) Inventeur: LYS, Sébastien, 92622 Gennevilliers Cedex (FR); TCHOFFO-TALOM, Friedman, 92622 Gennevilliers Cedex (FR)
(74) Mandataire: Lavoix

(56) Documents cités:
- US-A1- 2009 315 761
- US-A1- 2012 188 117
- US-A1- 2013 116 011

## Description

La présente invention concerne un dispositif radioélectrique d'émission-réception d'ondes radioélectriques comportant un générateur d'onde radioélectrique modulée en fréquence par un signal de modulation prédéterminé et un système antennaire d'émission-réception, ayant un angle d'ouverture d'antenne associée.

Elle concerne également un système de radio altimétrie associé.

Elle trouve des applications dans le domaine de radiocommunications, et plus particulièrement dans le domaine de l'aéronautique.

Des systèmes de radio altimétrie, utilisés dans le domaine de l'aéronautique civile ou militaire, sont plus généralement connus sous le nom de radioaltimètres.

Un radioaltimètre est un instrument installé à bord d'un aéronef et apte à fournir la hauteur de l'aéronef par rapport au sol ou à une surface survolée. Un radioaltimètre est en particulier utilisé pendant les phases de vol automatique ou les phases de vol critiques, telles que l'approche, l'atterrissage et le décollage. Le radioaltimètre est un élément essentiel dans la fourniture des aides au pilote, notamment en absence de visibilité, dans une utilisation couplée avec d'autres équipements de type TAWS (pour « terrain awareness warning system »), AFCS (pour « automatic flight control system ») et des calculateurs de mission pour le calcul de hauteur minimale.

La mesure de hauteur fournie par le radioaltimètre peut par ailleurs être utilisée pour diverses applications calculatoires mises en oeuvre par ordinateur de bord, comme par exemple le recalage de la position de l'aéronef par rapport à une carte pré-établie du terrain survolé.

Dans l'état de la technique, on connaît différents types de radioaltimètres, le principe général de tels instruments étant de mesurer la hauteur en mesurant le temps de propagation de signaux radioélectriques émis et reçus après réflexion au sol.

Un radioaltimètre comporte un générateur d'onde radioélectrique modulée en fréquence par un signal de modulation prédéterminé et un système antennaire d'émission-réception, ayant un angle d'ouverture d'antenne associée.

Il est connu d'utiliser l'émission continue d'onde radioélectrique modulée en fréquence par un signal de modulation comportant des rampes, à pente sensiblement linéaire, selon une excursion de fréquence ou pente δF, connue sous le nom de modulation FMCW pour « frequency-modulated continuous wave ». Dans le domaine civil, la bande de fréquence utilisée est de 4.2 à 4.4 GHz. Après réflexion sur le sol, une onde radioélectrique réfléchie est reçue en écho après une durée τ qui est fonction de la hauteur de l'aéronef et permet donc de calculer cette hauteur.

La précision du calcul est notamment dépendante de taille de la zone de réception des ondes radioélectriques émises sur la surface ciblée, qui est généralement le sol, qui est dépendante de l'ouverture du système antennaire et de l'altitude de vol.

Lorsque le système antennaire utilisé est à ouverture fixe, la taille de la zone de réception varie considérablement avec l'altitude de l'aéronef. En effet, plus l'altitude est élevée, plus la taille de la zone de réception est grande.

L'agrandissement de la zone de réception a plusieurs inconvénients, en particulier la possibilité d'accrochage sur des éléments très réfléchissants risquant de fausser le calcul de hauteur survolée.

De plus, une incertitude sur la direction associée à l'information de hauteur calculée induit des erreurs potentielles sur le recalage radioaltimétrique, sans ajout de systèmes d'interférométrie nécessitant des antennes supplémentaires.

Ainsi, il est souhaitable de mieux cibler l'émission d'ondes radioélectriques afin de mieux maîtriser la zone analysée et ainsi améliorer la précision de calcul de hauteur du radioaltimètre.

Les documents US2009/315761 A1 et US2012/188117 A1 décrivent des dispositifs d'émission-réception radioélectrique .

D'une manière plus générale, dans les systèmes de radiocommunications dans lesquels la distance entre émetteur et récepteur est susceptible de changer dynamiquement, il est utile de mieux contrôler la taille de la zone de réception des ondes radioélectriques émises.

Un objet de l'invention est de résoudre ce problème, tout en conservant un système de compacité comparable aux systèmes antennaires classiques.

A cet effet, selon un premier aspect, l'invention propose, un dispositif radioélectrique d'émission-réception d'ondes radioélectriques comportant un générateur d'onde radioélectrique modulée en fréquence par un signal de modulation prédéterminé et un système antennaire d'émission-réception, ayant un angle d'émission-réception de valeur d'ouverture d'antenne maximale associée, apte à émettre ladite onde radioélectrique émise et à recevoir une onde radioélectrique.

Le système antennaire comprend un premier réseau d'éléments rayonnants aptes à rayonner dans une première bande de fréquence et au moins un deuxième réseau d'éléments rayonnants apte à rayonner dans une deuxième bande de fréquence, une pluralité d'éléments d'activation aptes à activer et/ou à désactiver chacun des premier réseau et deuxième réseau d'éléments rayonnants, et un module de contrôle apte à contrôler lesdits éléments d'activation en fonction d'une valeur d'ouverture d'antenne choisie.

La valeur d'ouverture d'antenne est sélectionnée parmi un ensemble discret de valeurs d'ouverture d'antenne, chaque valeur d'ouverture d'antenne dudit ensemble discret correspondant à une configuration d'activation/désactivation desdits premier et deuxièmes réseaux d'éléments rayonnants.

Avantageusement, le dispositif radioélectrique d'émission-réception d'ondes radioélectriques selon l'invention permettant de sélectionner dynamiquement l'ouverture d'antenne par activation ou désactivation de réseaux d'éléments rayonnants. De plus, l'ajout d'au moins un deuxième réseau d'éléments rayonnants apte à rayonner dans une deuxième bande de fréquence dans un système antennaire comportant un premier réseau d'éléments rayonnants a un faible impact sur son dimensionnement.

Le dispositif radioélectrique d'émission-réception d'ondes radioélectriques selon l'invention peut présenter une ou plusieurs des caractéristiques ci-dessous, prises indépendamment ou dans toutes leurs combinaisons techniquement acceptables.

Ce dispositif comporte un module d'obtention d'une valeur d'ouverture d'antenne choisie.

Le système antennaire comporte une pluralité de deuxièmes réseaux d'éléments rayonnants, agencés selon une matrice de deuxièmes réseaux d'éléments rayonnants, chaque deuxième réseau d'éléments rayonnants ayant un point d'alimentation électrique propre.

Les d'activation sont des commutateurs, et le dispositif comporte une pluralité de commutateurs agencés de manière à réaliser une pluralité de configurations d'activation/désactivation desdits premier et deuxièmes réseaux d'éléments rayonnants.

Ce dispositif comporte un module de mémoire, et l'ensemble discret de valeurs d'ouverture d'antenne, ainsi que, pour chaque valeur d'ouverture, la configuration d'activation/désactivation desdits premier et deuxièmes réseaux d'éléments rayonnants associée, sont mémorisés.

Selon un autre aspect, l'invention concerne un procédé d'émission-réception d'ondes radioélectriques mis en oeuvre par un dispositif radioélectrique d'émission-réception d'ondes radioélectriques tel que brièvement décrit ci-dessus.

Ce procédé comporte, en mode émission ou réception, des étapes de :
- obtention d'une valeur d'ouverture d'antenne choisie,
- contrôle d'une pluralité d'éléments d'activation/désactivation des premier et deuxièmes réseaux d'éléments rayonnants en fonction de la valeur d'ouverture d'antenne choisie.

Ce procédé d'émission-réception d'ondes radioélectriques selon l'invention peut présenter une ou plusieurs des caractéristiques ci-dessous, prises indépendamment ou dans toutes leurs combinaisons techniquement acceptables.

Il comporte en outre, en mode d'émission, une étape de génération d'au moins une onde radioélectrique modulée en fréquence par un signal de modulation prédéterminé dans une première bande de fréquences.

Il comporte, en mode émission, des étapes de :
- comparaison de la valeur d'ouverture d'antenne choisie à une valeur d'ouverture d'antenne maximale,
- en cas de comparaison négative, transposition des ondes radioélectriques générées dans une deuxième bande de fréquence.

Ce procédé comporte en outre en outre, en mode réception, des étapes de :
- comparaison de la valeur d'ouverture d'antenne choisie à une valeur d'ouverture d'antenne maximale,
- en cas de comparaison négative, transposition des ondes radioélectriques reçues dans la première bande de fréquence.

Selon un autre aspect, l'invention concerne un système de radio altimétrie apte à être fixé à un système aéroporté et à fournir une distance dudit système aéroporté par rapport à une surface, comportant un dispositif radioélectrique d'émission-réception d'ondes radioélectriques tel que brièvement décrit ci-dessus, apte à émettre une onde radioélectrique et à recevoir une onde radioélectrique réfléchie par ladite surface, le système de radio altimétrie comportant en outre un module de traitement apte à calculer ladite distance en fonction des ondes radioélectriques émise et réfléchie.

Avantageusement, la précision de calcul de la distance entre le système aéroporté et ladite surface est améliorée grâce à la possibilité de faire varier l'ouverture d'antenne du système antennaire.

D'autres caractéristiques et avantages de l'invention ressortiront de la description qui en est donnée ci-dessous, à titre indicatif et nullement limitatif, en référence aux figures annexées, parmi lesquelles :
- la figure 1 illustre schématiquement un aéronef équipé d'un radioaltimètre et une zone de réception au sol associée ;
- la figure 2 représente les principaux modules fonctionnels d'un dispositif radioélectrique d'émission-réception d'ondes radioélectriques selon un mode de réalisation de l'invention ;
- la figure 3 représente schématiquement des réseaux d'éléments rayonnants d'un système antennaire ;
- la figure 4 représente schématiquement un circuit de contrôle d'activation/désactivation des réseaux d'éléments rayonnants de la figure 3 ;
- la figure 5 est un ordinogramme des principales étapes d'un procédé mis en oeuvre par un système de radio altimétrie selon un mode de réalisation.

Le dispositif radioélectrique de l'invention est décrit dans son application dans un système de radio altimétrie (ou radioaltimètre), fixé à un système aéroporté.

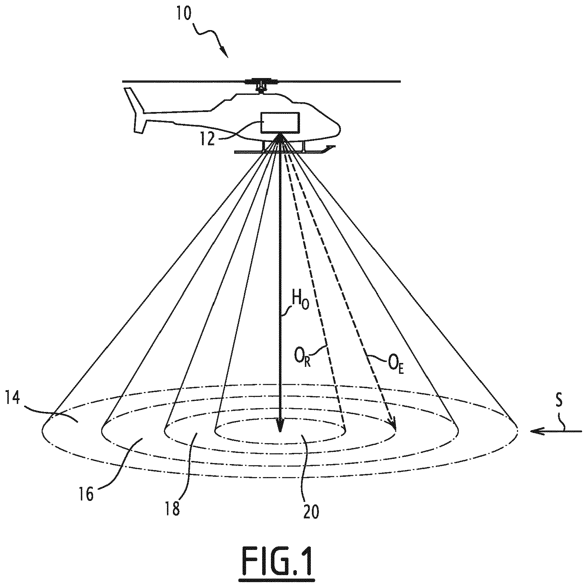

Dans l'exemple schématisé à la figure 1, un aéronef 10 est équipé d'un radioaltimètre 12, fixé à l'aéronef 10 qui est un hélicoptère dans cet exemple.

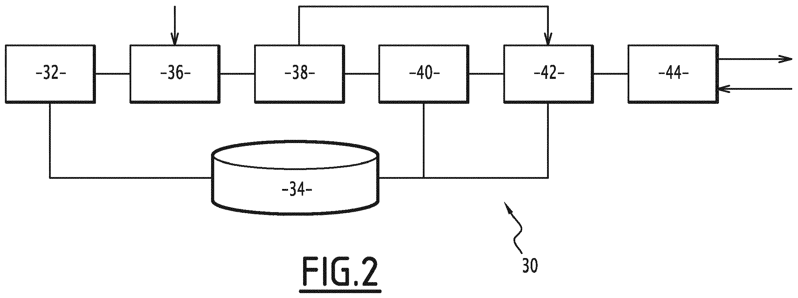

Le radioaltimètre 12 est équipé d'un dispositif radioélectrique 30 (figure 2) d'émission-réception d'ondes radioélectriques selon l'invention, comportant un système antennaire et apte à émettre une onde radioélectrique ou un faisceau d'ondes radio électriques vers une surface S ciblée, par exemple le sol.

Avantageusement, le dispositif radioélectrique d'émission-réception d'ondes radioélectriques permet le choix de valeur d'ouverture d'antenne et l'obtention de zones de réception 14, 16, 18 et 20 de tailles différentes selon la valeur d'ouverture d'antenne choisie.

Le radioaltimètre 12 a pour objectif l'estimation de la distance minimale survolée H₀, en fonction d'une ou plusieurs ondes radioélectriques émises O_{E} et ondes réfléchies reçues O_{R}.

Dans un mode de réalisation, chaque onde radioélectrique émise est modulée en fréquence, par exemple selon un signal comportant des rampes de variation de fréquence s'échelonnant entre une valeur Fₘᵢₙ et une valeur Fₘₐₓ, selon une excursion de fréquence ΔF = *abs*(Fₘₐₓ-Fₘᵢₙ), où *abs* représente la valeur absolue. Les ondes radioélectriques O_{E} se réfléchissent sur le sol S, et produisent des ondes réfléchies O_{R}. Ce mode de fonctionnement est appelé mode FMCW pour « frequency-modulated continuous wave ».

Il est à noter que l'application de l'invention ne se limite pas à ce mode de fonctionnement d'un radio altimètre.

Les zones de réception 14, 16, 18 et 20 ont des tailles variables selon la valeur d'ouverture d'antenne sélectionnée.

Chaque zone de réception, ou tâche au sol, est la zone de rayonnement des ondes radioélectriques émises avec une valeur d'ouverture d'antenne donnée. Chaque zone de réception est sensiblement circulaire, son rayon dépendant de la valeur d'ouverture d'antenne.

Il est à noter que les zones de réception 14 à 20 sont toutes représentées sur la figure 1 à des fins d'explication. En pratique, et comme expliqué plus en détail ci-après, suite à un choix de valeur d'ouverture d'antenne, une seule zone de réception parmi les zones de réception 14 à 20 est effective.

Dans l'exemple de la figure 1, on a représenté schématiquement une zone de réception 14 correspondant à une première bande de fréquences du spectre électromagnétique, par exemple la bande C, définie par les fréquences de 4 à 8 GHz.

La zone de réception 20 correspond à une deuxième bande de fréquence du spectre électromagnétique, par exemple la bande appelée bande Ka, s'étendant de 27 à 40 GHz.

De plus, deux zones de réception supplémentaires 16 et 18, correspondant à une sélection de différents réseaux d'éléments rayonnants dans la deuxième bande de fréquence.

Ainsi, le système antennaire du dispositif radioélectrique d'émission-réception d'ondes radioélectriques est apte à fonctionner, dans le mode de réalisation décrit, dans deux bandes de fréquence, une première bande de fréquence, ou bande basse et une deuxième bande de fréquence, ou bande haute, et plusieurs valeurs d'ouverture d'antenne, correspondant à des zones de réception de tailles différentes, sont sélectionnables dans la deuxième bande de fréquence.

Comme expliqué plus en détail par la suite, ces différentes valeurs d'ouverture d'antenne sont atteignables via un contrôle d'activation ou de désactivation, par alimentation électrique, d'éléments rayonnants d'antenne.

La figure 2 illustre schématiquement les principaux blocs fonctionnels d'un dispositif radioélectrique d'émission-réception d'ondes radioélectriques selon un mode de réalisation, intégrable dans un radioaltimètre et permettant une sélection d'une valeur d'ouverture d'antenne parmi une pluralité de valeurs d'ouverture d'antenne.

Le dispositif radioélectrique 30 comprend un module d'interface d'entrée 32 pour l'acquisition de divers paramètres de fonctionnement, à mémoriser dans une mémoire 34 et un module 36 d'obtention d'une valeur d'ouverture d'antenne.

Dans un mode de réalisation, le module 36 reçoit une valeur d'ouverture d'antenne d'un opérateur.

En variante, le module 36 reçoit une valeur d'ouverture d'antenne d'un autre module de calcul, pour un fonctionnement en boucle pour sélectionner une valeur d'ouverture d'antenne optimisée pour une application donnée, par exemple pour un calcul de hauteur H₀ lorsque le dispositif radioélectrique 30 est intégré dans un radioaltimètre.

Le dispositif radioélectrique 30 comporte un module 38 de génération d'onde radioélectrique dans une première bande de fréquence, par exemple la bande C.

Un module 40 de transposition d'onde l'onde radioélectrique dans une deuxième bande de fréquence est mis en oeuvre optionnellement, en fonction de la valeur d'ouverture choisie obtenue par le module 36 d'obtention d'une valeur d'ouverture d'antenne. Par exemple, la deuxième bande de fréquence est la bande Ka.

En effet, si la valeur d'ouverture d'antenne correspond à l'ouverture d'antenne maximale, l'émission de l'onde radioélectrique se fait dans la première bande de fréquence, qui est plus basse que la deuxième bande de fréquence.

En variante, les modules 38 et 40 sont remplacés par un seul module de génération et de mise en forme d'une onde radioélectrique dans une bande de fréquence sélectionnée par un paramètre.

Un module 42 de contrôle permet de sélectionner les éléments rayonnants du système antennaire 44 à utiliser en émission et en réception.

En effet, le système antennaire 44 comprend un premier réseau d'éléments rayonnants aptes à réaliser l'émission dans la première bande de fréquence.

Il comprend également un ensemble de deuxièmes réseaux d'éléments rayonnants aptes à réaliser l'émission dans la deuxième bande de fréquence.

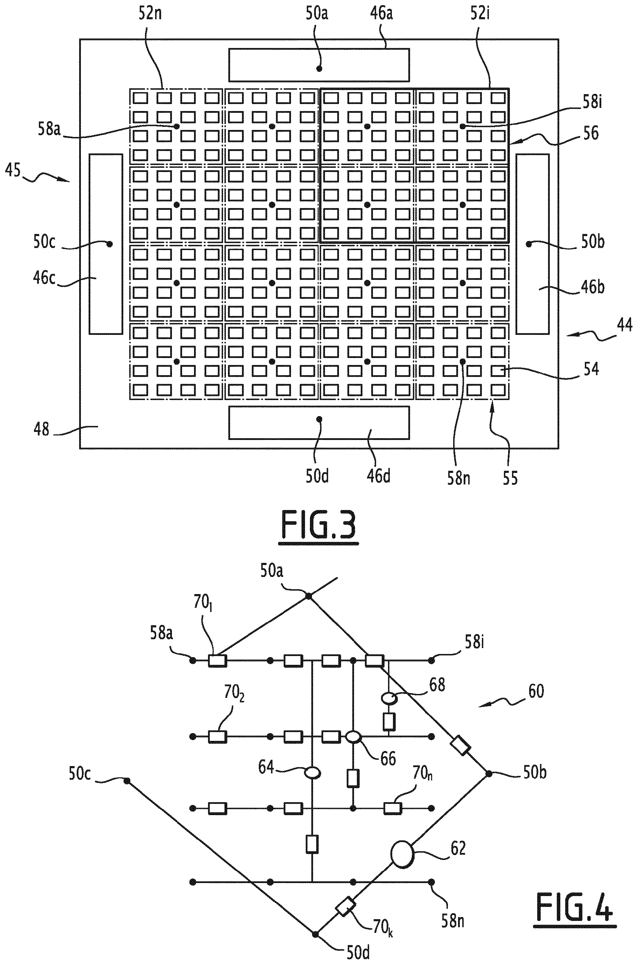

La figure 3 illustre schématiquement un système antennaire 44 selon un mode de réalisation.

Le système comporte un premier réseau 45 de premiers éléments rayonnants fonctionnant dans la bande basse 46a, 46b, 46c et 46d, positionnés sur un plan réflecteur de support 48 et comportant chacun un point d'alimentation électrique 50a, 50b, 50c et 50d. Chacun des premiers éléments rayonnants est activé lorsqu'il est alimenté.

Dans ce mode de réalisation, sur le même plan de support 48 sont positionnés des deuxièmes réseaux d'éléments rayonnants 52₁,..., 52ᵢ,.. , 52ₙ, fonctionnant dans la bande haute.

Chacun de ces deuxièmes réseaux d'éléments rayonnants est composé d'un pavé régulier d'éléments rayonnants ou patchs élémentaires 54, agencés selon un maillage régulier.

Dans l'exemple illustré le maillage régulier est carré, mais tout autre maillage régulier est envisageable.

Par exemple, selon une variante, les deuxièmes éléments rayonnants sont agencés selon des anneaux concentriques.

Les deuxièmes réseaux 52₁ à 52ₙ sont également agencés selon une matrice 55 de deuxièmes réseaux d'éléments rayonnants.

Chacun des deuxièmes réseaux d'éléments rayonnants 52ᵢ comporte un point d'alimentation électrique 58ᵢ, permettant d'activer ou non ce réseau en émission et en réception.

Avantageusement, chacun de ces deuxièmes réseaux d'éléments rayonnants 52ᵢ est activable individuellement, ce qui permet de réaliser diverses sélections d'ensembles de deuxièmes réseaux activés par le module de contrôle 42, formant une configuration d'émission-réception de deuxièmes réseaux d'élément rayonnants apte à émettre et recevoir un faisceau d'ondes radioélectriques correspondant à une valeur d'ouverture d'antenne différente. On obtient un système antennaire à multiples valeurs d'ouverture d'antenne sélectionnables.

Par exemple, l'activation du premier réseau 45 d'éléments rayonnants permet d'obtenir la zone de réception 14 de la figure 1, l'activation de la totalité de la matrice 55 de deuxièmes réseaux permet d'obtenir la zone de réception 20 de la figure 1.

L'activation de l'ensemble de deuxièmes réseaux d'éléments rayonnants formant la sous matrice 56 permet d'obtenir la zone de réception 18 et l'activation d'un carré 52ᵢ unique permet d'obtenir la zone 16.

On a illustré ici une sélection de 4 configurations de deuxièmes réseaux d'éléments rayonnants activés, mais il est entendu qu'un nombre N de configurations supérieur à 4 est réalisable, selon le nombre et l'agencement des réseaux d'éléments rayonnants considérés.

La figure 4 illustre schématiquement un circuit 60 d'activation/désactivation des réseaux d'éléments rayonnants de la figure 3. Les divers points d'alimentation des premiers et deuxièmes réseaux d'éléments rayonnants correspondants de la figure 3, ainsi que des éléments d'activation, par exemple des commutateurs, permettent de contrôler l'activation et la désactivation des divers réseaux d'éléments rayonnants.

Le circuit électrique 60 comporte un point d'alimentation 62 du premier réseau d'éléments rayonnants, et des points alimentation 64, 66, 68 d'alimentation des ensembles de deuxièmes réseaux considérés.

De manière plus générale, chacun des ensembles de premiers et deuxièmes réseaux d'éléments rayonnants associé à une valeur d'ouverture d'antenne a un point d'alimentation associé.

Le circuit de la figure 4 comporte des commutateurs 70₁,...,70ₖ,...70ₙ permettant d'alimenter ou non les premiers et deuxièmes réseaux d'éléments rayonnants.

En variante, les éléments 70₁,...,70ₖ,...70ₙ d'activation/désactivation sont des interrupteurs.

Diverses configurations d'ouverture/fermeture des éléments d'activation 70₁ à 70ₙ sont prévues, chaque configuration correspondant un ensemble de réseaux d'éléments rayonnants activés et à une valeur d'ouverture d'antenne donnée.

Les diverses configurations, indiquant la correspondance entre positions des divers commutateurs et valeur d'ouverture d'antenne associée, sont mémorisées dans un module de mémoire 34, par exemple dans des registres ou dans un fichier.

Ainsi, le choix de l'ouverture d'antenne associée au système antennaire 44 se fait grâce à la sélection de la position des divers éléments d'activation du circuit 60.

Un ensemble discret de valeurs d'ouverture d'antenne différentes peut être obtenu.

Selon un mode de réalisation de l'invention, un radioaltimètre apte à être fixé à un système aéroporté et à fournir une distance dudit système aéroporté par rapport à une surface, comporte un dispositif radioélectrique d'émission-réception d'ondes radioélectriques tel que décrit ci-dessus et un module de traitement apte à calculer ladite distance en fonction des ondes radioélectriques émise et réfléchie.

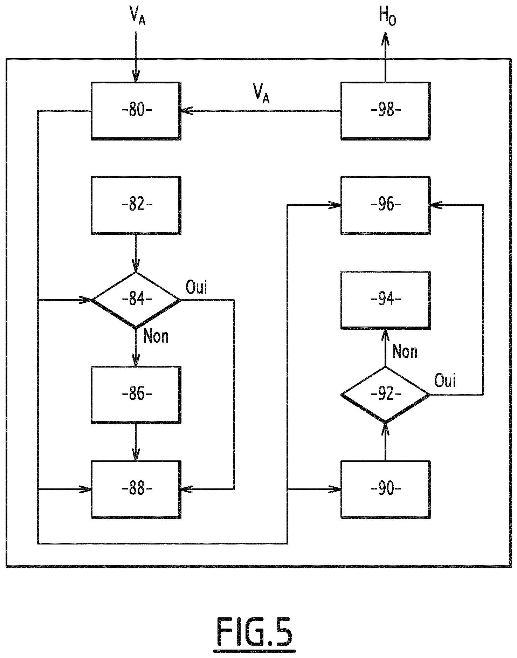

La figure 5 est un organigramme des principales étapes mises en oeuvre par un radioaltimètre comprenant un dispositif radiofréquence tel que décrit ci-dessus, pour un calcul de distance par rapport à une surface survolée.

Lors d'une étape 80, une valeur d'ouverture d'antenne V_{A} à appliquer est obtenue, soit via une interface homme-machine sous la commande d'un opérateur, soit par calcul comme expliqué ci-après.

Un faisceau d'ondes radioélectriques à émettre est généré lors d'une étape 82, dans une première bande de fréquence, par exemple la bande C.

Il est vérifié lors d'une étape de vérification 84 si la valeur d'ouverture d'antenne est égale à une valeur d'ouverture maximale préalablement mémorisée.

En cas de réponse négative, l'étape 84 est suivie d'une étape 86 de transposition afin de transposer les ondes radioélectriques à émettre dans la deuxième bande de fréquence, par exemple la bande Ka.

En cas de réponse positive à l'étape de vérification 84, ou après l'étape 86, l'étape 88 de choix de réseaux d'éléments rayonnants d'émission consiste à déterminer, en fonction de la valeur d'ouverture d'antenne V_{A}, à partir de configurations préalablement mémorisées mettant en correspondance les diverses valeurs d'ouverture d'antenne possibles avec une configuration d'ouverture/fermeture des commutateurs du circuit de commande.

Par exemple, lorsque la valeur d'ouverture d'antenne V_{A} est la valeur d'ouverture maximale, seul le premier réseau d'éléments rayonnants est activé.

L'étape 88 de choix de réseaux d'éléments rayonnants d'émission applique un contrôle d'activation/désactivation des commutateurs permettant l'alimentation électrique des divers réseaux d'éléments rayonnants sélectionnés et l'émission des ondes radioélectriques.

En réception, une activation/désactivation des réseaux d'éléments rayonnants est également mise en oeuvre lors d'une étape 90, en fonction de la valeur d'ouverture d'antenne V_{A}.

L'étape 90 est suivie d'une étape 92 de vérification, analogue à l'étape 84, afin de vérifier si la valeur d'ouverture d'antenne V_{A} est égale à une valeur d'ouverture maximale préalablement mémorisée.

En cas de réponse négative, l'étape 92 est suivie d'une étape 94 de transposition afin de transposer les ondes radioélectriques reçues dans la première bande de fréquence.

En cas de réponse positive à l'étape de vérification 92, ou après l'étape 94, l'étape 96 met en oeuvre les diverses opérations de réception et de démodulation des ondes radioélectriques reçues, transposées, le cas échéant, dans la première bande de fréquence.

Ensuite, une étape 98 d'extraction et de calcul de la distance entre le radioaltimètre et la surface ayant réfléchi les ondes radioélectriques reçues est appliquée.

SI le radioaltimètre détermine, selon des méthodes qui lui sont propres et en fonction de sa mission, que la zone de réception analysée n'est pas satisfaisante, il peut commander une nouvelle valeur d'ouverture d'antenne. Une nouvelle valeur d'ouverture d'antenne, inférieure à la valeur d'ouverture d'antenne V_{A} utilisée, est obtenue et les étapes 80 à 98 sont itérées.

Avantageusement, ce mode de réalisation met en oeuvre des opérations de traitement d'ondes radioélectriques dans la première bande de fréquence, qui sont classiques.

Avantageusement, un radioaltimètre connu, en bande C, modifié par ajout de modules d'obtention de valeur d'ouverture d'antenne, de transposition entre lesdites première et deuxième bandes de fréquence et de contrôle d'activation/désactivation des réseaux d'éléments rayonnants à utiliser en émission et en réception, est utilisable.

Ainsi, la solution proposée présente de faibles coûts de fabrication, tout en maintenant la compacité du dispositif.

L'invention a été décrite dans son application à un dispositif radiofréquence apte à émettre et à recevoir dans deux bandes de fréquence différentes. Cependant, l'invention ne se limite pas à ce cas d'application, et est applicable pour un fonctionnement avec plus de deux bandes de fréquence, des réseaux d'éléments rayonnants étant sélectionnables dans chaque bande de fréquence pour réaliser diverses valeurs d'ouverture d'antenne.

## Revendications

1. Dispositif radioélectrique d'émission-réception d'ondes radioélectriques comportant un générateur d'onde radioélectrique modulée en fréquence par un signal de modulation prédéterminé et un système antennaire d'émission-réception, ayant un angle d'émission-réception de valeur d'ouverture d'antenne maximale associée, apte à émettre ladite onde radioélectrique émise et à recevoir une onde radioélectrique, le système antennaire (44) comprend un premier réseau (45) d'éléments rayonnants (46a, 46b, 46c, 46d) aptes à rayonner dans une première bande de fréquence et au moins un deuxième réseau (52ᵢ, 55, 56) d'éléments rayonnants apte à rayonner dans une deuxième bande de fréquence, **caractérisé en ce que** le dispositif comprend une pluralité d'éléments d'activation (70₁,..70ᵢ, .., 70ₙ) aptes à activer et/ou à désactiver chacun des premier réseau et deuxième réseau d'éléments rayonnants,
et un module de contrôle (42) apte à contrôler lesdits éléments d'activation (70₁,..70ᵢ, .., 70ₙ) en fonction d'une valeur d'ouverture d'antenne choisie parmi un ensemble discret de valeurs d'ouverture d'antenne, chaque valeur d'ouverture d'antenne dudit ensemble discret correspondant à une configuration d'activation/désactivation d'un desdits premier et deuxièmes réseaux d'éléments rayonnants.

2. Dispositif radioélectrique selon la revendication 1, **caractérisé en ce qu'**il comporte un module d'obtention (36) d'une valeur d'ouverture d'antenne choisie.

3. Dispositif radioélectrique selon l'une quelconque des revendications 1 ou 2, **caractérisé en ce que** le système antennaire comporte une pluralité de deuxièmes réseaux (52₁,...,52ᵢ,..., 52ₙ) d'éléments rayonnants, agencés selon une matrice (55) de deuxièmes réseaux d'éléments rayonnants, chaque deuxième réseau d'éléments rayonnants ayant un point d'alimentation électrique propre.

4. Dispositif radioélectrique selon l'une quelconque des revendications 1 à 3, **caractérisé en ce que** lesdits éléments d'activation (70₁,..70ᵢ, .., 70ₙ) sont des commutateurs, et **en ce qu'**il comporte une pluralité de commutateurs agencés de manière à réaliser une pluralité de configurations d'activation/désactivation desdits premier et deuxièmes réseaux d'éléments rayonnants.

5. Dispositif radioélectrique selon la revendication 1, **caractérisé en ce qu'**il comporte un module de mémoire (34) et **en ce que** l'ensemble discret de valeurs d'ouverture d'antenne, ainsi que, pour chaque valeur d'ouverture, la configuration d'activation/désactivation desdits premier et deuxièmes réseaux d'éléments rayonnants associée, sont mémorisés.

6. Procédé d'émission-réception d'ondes radioélectriques mis en oeuvre par un dispositif radioélectrique d'émission-réception d'ondes radioélectriques selon l'une quelconque des revendications 1 à 5,
**caractérisé en ce qu'**il comporte, en mode émission ou réception, des étapes de :
- obtention (80) d'une valeur d'ouverture d'antenne choisie,
- contrôle (88,90) d'une pluralité d'éléments d'activation/désactivation des premier et deuxièmes réseaux d'éléments rayonnants en fonction de la valeur d'ouverture d'antenne choisie.

7. Procédé selon la revendication 6, **caractérisé en ce qu'**il comporte en outre, en mode d'émission, une étape de génération (82) d'au moins une onde radioélectrique modulée en fréquence par un signal de modulation prédéterminé dans une première bande de fréquences.

8. Procédé selon la revendication 7, **caractérisé en ce qu'**il comporte, en mode émission, des étapes de :
- comparaison (84) de la valeur d'ouverture d'antenne choisie à une valeur d'ouverture d'antenne maximale,
- en cas de comparaison négative, transposition (86) des ondes radioélectriques générées dans une deuxième bande de fréquence.

9. Procédé selon l'une quelconque des revendications 6 à 8, **caractérisé en ce qu'**il comporte en outre en outre, en mode réception, des étapes de :
- comparaison (92) de la valeur d'ouverture d'antenne choisie à une valeur d'ouverture d'antenne maximale,
- en cas de comparaison négative, transposition (94) des ondes radioélectriques reçues dans la première bande de fréquence.

10. Système de radio altimétrie apte à être fixé à un système aéroporté et à fournir une distance dudit système aéroporté par rapport à une surface, **caractérisé en ce qu'**il comporte un dispositif radioélectrique d'émission-réception d'ondes radioélectriques selon l'une quelconque des revendications 1 à 5, apte à émettre ladite onde radioélectrique et à recevoir une onde radioélectrique réfléchie par ladite surface, le système de radio altimétrie comportant en outre un module de traitement apte à calculer ladite distance en fonction des ondes radioélectriques émise et réfléchie.

## Patentansprüche

1. Funkvorrichtung zum Senden-Empfangen von Funkwellen, welche aufweist einen Erzeuger von Funkwellen, die mittels eines vorbestimmten Modulationssignals frequenzmoduliert sind, und ein Antennen-System zum Senden-Empfangen, welches einen Senden-Empfangen-Winkel mit dem maximalen assoziierten Antennenöffnungs-Wert hat, geeignet, um die besagte gesendete Funkwelle zu senden und eine Funkwelle zu empfangen,
wobei das Antennen-System (44) aufweist ein erstes Netz (45) von Strahlerelementen (46a, 46b, 46c, 46d), die geeignet sind, um in einem ersten Frequenzband zu strahlen, und mindestens ein zweites Netz (52ᵢ, 55, 56) von Strahlerelementen, geeignet, um in einem zweiten Frequenzband zu strahlen,
**dadurch gekennzeichnet, dass** die Vorrichtung aufweist
eine Mehrzahl von Aktivierungselementen (70₁,..70ᵢ, .., 70ₙ), die geeignet sind, um jedes von dem ersten Netz und dem zweiten Netz von Strahlerelementen zu aktivieren und/oder deaktivieren,
und ein Steuerungsmodul (42), welches geeignet ist, um die besagten Aktivierungselemente (70₁,..70ᵢ, .., 70ₙ) abhängig von einem Antennenöffnungs-Wert zu steuern, der ausgewählt ist aus einer diskreten Menge von Antennenöffnungs-Werten, wobei jeder Antennenöffnungs-Wert der besagten diskreten Menge zu einer Aktivierungs-/Deaktivierungs-Konfiguration von einem des besagten ersten und des/der besagten zweiten Netze(s) von Strahlerelementen korrespondiert.

2. Funkvorrichtung gemäß Anspruch 1, **dadurch gekennzeichnet, dass** sie ein Modul zum Erlangen (36) eines gewählten Antennenöffnungs-Wertes aufweist.

3. Funkvorrichtung gemäß irgendeinem der Ansprüche 1 oder 2, **dadurch gekennzeichnet, dass** das Antennen-System eine Mehrzahl von zweiten Netzen (52₁,...,52ᵢ,..., 52ₙ) von Strahlerelementen aufweist, die angeordnet sind gemäß einer Matrix (55) von zweiten Netzen von Strahlerelementen, wobei jedes zweite Netz von Strahlerelementen einen eigenen Punkt zur elektrischen Spannungsversorgung hat.

4. Funkvorrichtung gemäß irgendeinem der Ansprüche 1 bis 3, **dadurch gekennzeichnet, dass** die besagten Aktivierungselemente (70₁,.. 70ᵢ, .., 70ₙ) Schalter sind, und dadurch, dass sie eine Mehrzahl von Schaltern aufweist, die auf eine Weise angeordnet sind, um eine Mehrzahl von Aktivierungs-/Deaktivierungs-Konfigurationen des besagten ersten und des/der besagten zweiten Netze(s) von Strahlerelementen zu realisieren.

5. Funkvorrichtung gemäß Anspruch 1, **dadurch gekennzeichnet, dass** sie ein Speichermodul (34) aufweist, und dadurch, dass die diskrete Menge an Antennenöffnungs-Werten sowie für jeden Öffnungswert die assoziierte Aktivierungs-/Deaktivierungs-Konfiguration des besagten ersten und des/der besagten zweiten Netze(s) von Strahlerelementen gespeichert sind.

6. Verfahren zum Senden-Empfangen von Funkwellen, welches mittels einer Funkvorrichtung zum Senden-Empfangen von Funkwellen gemäß irgendeinem der Ansprüche 1 bis 5 realisiert ist,
**dadurch gekennzeichnet, dass** es in einem Sende- oder Empfangs-Modus die folgenden Schritte aufweist:
- Erlangen (80) eines gewählten Antennenöffnungs-Wertes,
- Steuern (88, 90) einer Mehrzahl von Aktivierungs-/Deaktivierungs-Elementen von dem ersten und dem/den zweiten Netz(en) von Strahlerelementen abhängig von dem gewählten Antennenöffnungs-Wert.

7. Verfahren gemäß Anspruch 6, **dadurch gekennzeichnet, dass** es im Sende-Modus ferner aufweist einen Schritt des Erzeugens (82) von mindestens einer Funkwelle, die mittels eines vorbestimmten Modulationssignals frequenzmoduliert ist, in einem ersten Frequenzband.

8. Verfahren gemäß Anspruch 7, **dadurch gekennzeichnet, dass** es im Sende-Modus die folgenden Schritte aufweist:
- Vergleichen (84) des gewählten Antennenöffnungs-Wertes mit einem maximalen Antennenöffnungs-Wert,
- im Falle eines negativen Vergleichens Umsetzen (86) von Funkwellen, die in einem zweiten Frequenzband erzeugt sind.

9. Verfahren gemäß irgendeinem der Ansprüche 6 bis 8, **dadurch gekennzeichnet, dass** es ferner ferner im Empfangs-Modus die folgenden Schritte aufweist:
- Vergleichen (92) des gewählten Antennenöffnungs-Wertes mit einem maximalen Antennenöffnungs-Wert,
- im Falle eines negativen Vergleichens Umsetzen (94) von Funkwellen, die in dem ersten Frequenzband empfangen werden.

10. System zur Funk-Höhenmessung, welches geeignet ist, um an einem fliegenden System befestigt zu sein, und um eine Entfernung des besagten fliegenden Systems bezüglich einer Fläche bereitzustellen, **dadurch gekennzeichnet, dass** es eine Funkvorrichtung zum Senden-Empfangen von Funkwellen gemäß irgendeinem der Ansprüche 1 bis 5 aufweist, welche geeignet ist, um die besagte Funkwelle zu senden und eine Funkwelle, die von der besagten Fläche reflektiert wird, zu empfangen, wobei das System zur Funk-Höhenmessung ferner ein Verarbeitungs-Modul aufweist, welches geeignet ist, um die besagte Entfernung abhängig von der gesendeten und der empfangenen Funkwelle zu berechnen.

## Claims

1. A radioelectric device for transmitting and receiving radio waves including a radio wave generator generating radio waves that are frequency-modulated by a predetermined modulation signal and a transceiver antenna system, having a transmission-reception angle with an associated antenna aperture value, able to transmit said transmitted radio wave and receive a radio wave,
the antenna system (44) comprises a first array (45) of radiating elements (50a, 50b, 50c, 50d) able to radiate in a first frequency band and at least one second array (52ᵢ, 55, 56) of radiating elements able to radiate in a second frequency band,
**characterized in that** the device comprises
a plurality of activation elements (70₁, ... 70ᵢ, ..., 70ₙ) able to activate and/or deactivate each of the first array and second array of radiating elements,
and a control module (42) able to control said activation elements (70₁, ... 70ᵢ, ..., 70ₙ) based on a selected antenna aperture value selected from among a discrete set of antenna aperture values, each antenna aperture value of said discrete set corresponding to an activation/deactivation configuration of one of said first and second arrays of radiating elements.

2. The radioelectric device according to claim 1, **characterized in that** it includes a module (36) for obtaining a selected antenna aperture value.

3. The radioelectric device according to any one of claims 1 or 2, **characterized in that** the antenna system includes a plurality of second arrays (52₁, ..., 52ᵢ, ..., 52ₙ) of radiating elements, arranged in a matrix (55) of second arrays of radiating elements, each second array of radiating elements having its own power supply point.

4. The radioelectric device according to any one of claims 1 to 3, **characterized in that** said activation elements (70₁, ... 70ᵢ, .., 70ₙ) are switches, and **in that** the device includes a plurality of switches arranged so as to produce a plurality of activation/deactivation configurations of said first and second arrays of radiating elements.

5. The radioelectric device according to claim 1, **characterized in that** it includes a memory module (34), and **in that** the discrete set of antenna aperture values, as well as, for each antenna aperture value, the associated activation/deactivation configuration of said first and second arrays of radiating elements, are stored.

6. A method for transmitting-receiving radio waves carried out by a radioelectric device for transmitting-receiving radio waves according to any one of claims 1 to 5,
**characterized in that** it includes, in transmission or reception mode, the following steps:
- obtaining (80) a selected antenna aperture value,
- controlling (88, 90) a plurality of activation/deactivation elements of the first and second arrays of radiating elements based on the selected antenna aperture value.

7. The method according to claim 6, **characterized in that** it further includes, in transmission mode, a step (82) for generating at least one radio wave frequency-modulated by a predetermined modulation signal in a first frequency band.

8. The method according to claim 7, **characterized in that** it includes, in transmission mode, the following steps:
- comparing (84) the selected antenna aperture value to a maximum antenna aperture value,
- if the comparison is negative, transposing (86) the generated radio waves in a second frequency band.

9. The method according to any one of claims 6 to 8, **characterized in that** in reception mode, it further includes the following steps:
- comparing (92) the selected antenna aperture value to a maximum antenna aperture value,
- if the comparison is negative, transposing (94) the received radio waves in the first frequency band.

10. A radio altimeter system suitable for being fastened to an airborne system and providing a distance of said airborne system relative to a surface, **characterized in that** it includes a radioelectric device for transmitting-receiving radio waves according to any one of claims 1 to 5, able to transmit said radio wave and to receive a radio wave reflected by said surface, the radio altimeter system further including a processing module able to compute said distance as a function of the transmitted and reflected radio waves.
